# EUROPEAN PATENT SPECIFICATION

(11) **EP 3 971 472 B1**
(45) Date of publication and mention of the grant of the patent: **02.10.2024**
(21) Application number: 20915320.4
(22) Date of filing: 14.12.2020
(51) Int. Cl.: F21V 23/00, B25F 5/00, H02J 7/00, F21L 4/00, F21L 4/08

(54) **UTILITY LIGHT, COMBINATION OF BATTERY PACK AND UTILITY LIGHT, AND ELECTRIC TOOL**
NUTZLICHT, KOMBINATION AUS BATTERIEPACK UND NUTZLICHT UND ELEKTROWERKZEUG
BALADEUSE, COMBINAISON DE BLOC-BATTERIE ET DE BALADEUSE, ET OUTIL ÉLECTRIQUE

(30) Priority: 23.01.2020 CN 202010076760
(43) Date of publication of application: 23.03.2022
(73) Proprietor: Nanjing Chervon Industry Co., Ltd., Nanjing, Jiangsu 211106 (CN)
(72) Inventor: LU, Zhijian, Nanjing, Jiangsu 211106 (CN); ZHU, Hong, Nanjing, Jiangsu 211106 (CN); GAO, Qing, Nanjing, Jiangsu 211106 (CN)
(74) Representative: Sun, Yiming
(86) International application number: PCT/CN2020/136005
(87) International publication number: WO 2021/147564

(56) References cited:
- CN-A- 101 929 607
- CN-A- 104 613 402
- CN-A- 107 150 315
- CN-A- 110 649 680
- CN-U- 204 131 178
- CN-U- 204 497 813
- CN-U- 208 890 421
- CN-U- 208 890 421
- US-A1- 2010 181 966
- US-A1- 2014 097 692

## Description

### TECHNICAL FIELD

The present application relates to the field of power equipment, for example, a tool lamp, a combination of a battery pack and a tool lamp, and a power tool.

### BACKGROUND

With the development of power equipment, power tools or lighting devices have been increasingly used in different fields such as industry, construction, and garden machinery and people have higher and higher requirements for the power equipment. In the related art, the power equipment is generally powered by a battery pack or a built-in cell, and when the battery pack or the cell is exhausted, the power equipment can continue to operate only after the battery pack or the cell is fully charged. Secondly, portable equipment generally can only accept the input of external power, and an existing power tool needs to be equipped with a special charger for charging the battery pack so that in an emergency, the equipment cannot be adapted to the power supply of an external electronic device, thereby limiting the use of the equipment. In addition, the power tool needs to be equipped with a special adapter connected to the external electronic device. However, an existing charger and adapter have relatively complicated structures and relatively high manufacturing costs and are bulky and inconvenient to CN208890421U and CN204497813U disclose battery driven power tools.

### SUMMARY

To solve defects in the related art, an object of the present application is to provide an adapter and a combination of a battery pack and an adapter, which have relatively low costs, are convenient to carry, and can expand the use of a battery pack of a power tool.

To achieve the preceding object, the present application adopts technical solutions described below. Therefore, aspects of the invention are disclosed in independent claim 1. The dependent claims disclose respective embodiments of the invention.

A power tool includes a power module, a direct current interface, and a two-way control module.

The power module includes a motor and a cell, where the motor is configured to drive an output unit to output power to an outside, and the cell supplies electric power to the motor.

The direct current interface is configured to be capable of being selectively connected to an external power consumption device or an external power supply device.

The two-way control module is connected in series between the direct current interface and the power module, where the two-way control module is configured to adjust electric power of the external power supply device according to a control signal of the direct current interface to form an electric power input adapted to the cell and/or the motor so that the external power supply device supplies power to the cell and/or the motor; or the two-way control module is configured to match a discharge voltage of the cell with a charge voltage required by the external power consumption device according to the control signal of the direct current interface so that the external power consumption device is charged.

Optioanlly, the two-way control module includes a voltage conversion circuit, a main controller, and a two-way power supply controller.

The voltage conversion circuit is connected to an adapter interface, where the voltage conversion circuit is configured to convert the electric power of the external power supply device into the electric power input adapted to the cell and/or the motor; or the voltage conversion circuit is configured to convert an electric power of the cell into an electric power output adapted to the external power consumption device.

The main controller is connected to the direct current interface, where the main controller is configured to output a control signal to a two-way power supply controller according to a state signal of the direct current interface and a state signal of the adapter interface.

The two-way power supply controller is connected to the voltage conversion circuit and the main controller, respectively, where the two-way power supply controller is configured to control a current direction and an output voltage of the voltage conversion circuit according to the control signal of the main controller so that the external power supply device supplies power to the cell and/or the motor or the cell is discharged to supply power to the external power consumption device.

Optionally, the main controller further includes a communication terminal communicatively connected to the motor, and the main controller controls the current direction of the voltage conversion circuit according to communication information of the motor so that the external power supply device supplies power to the motor.

Optionally, the direct current interface includes a detection terminal and an electric power terminal, where the detection terminal detects the state signal of the direct current interface, and the electric power terminal is configured to output or input electric power.

Optionally, the electric power terminal includes at least two power positive terminals, where the at least two power positive terminals are connected to a positive electrode of the external power consumption device or a positive electrode of the external power supply device.

Optionally, the state signal includes at least a charge signal and a discharge signal.

Optionally, in the case where the direct current interface is connected to the external power supply device, the detection terminal detects the charge signal of the direct current interface and sends a charge control signal to the main controller so that the main controller controls the current direction of the voltage conversion circuit and thus the external power supply device charges the cell.

Optionally, in the case where the detection terminal detects a high level, it is determined that the direct current interface receives the charge signal.

Optionally, in the case where the direct current interface is connected to the external power consumption device, the detection terminal detects the discharge signal of the direct current interface and sends a discharge control signal to the main controller so that the main controller controls the current direction of the voltage conversion circuit and thus the cell is discharged to supply power to the external power consumption device.

Optionally, in the case where the detection terminal detects a low level, it is determined that the direct current interface receives the discharge signal.

The present application has beneficial effects described below.

The power tool in the present application is provided with the direct current interface and the two-way control module, which expands the use of the power tool and is convenient for a user to use. It is to be understood that since a design circuit architecture of the two-way power supply controller is adopted in the power tool, the charge and discharge control can be achieved through the same controller, which reduces the introduction of other operational amplifier circuits and simplifies the circuit structure.

### BRIEF DESCRIPTION OF DRAWINGS

FIG. 1 is a structural view of a combination of a battery pack and a tool lamp according to an example;
FIG. 2 is a circuit block diagram of the tool lamp in FIG. 1;
FIG. 3 is a structural view of a power tool according to another example; and
FIG. 4 is a circuit block diagram of the power tool in FIG. 3.

### DETAILED DESCRIPTION

The present application will be described below in detail in conjunction with drawings and embodiments.

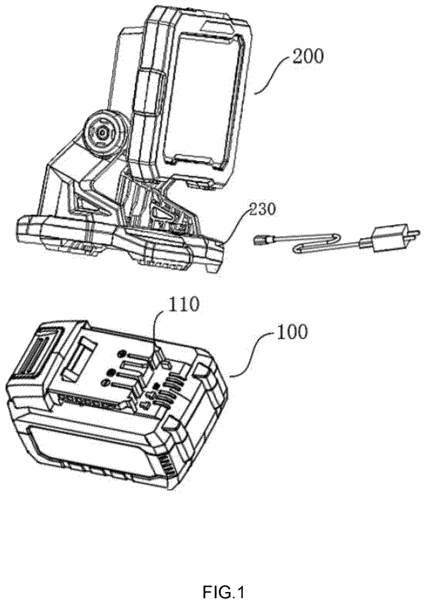

As shown in FIG. 1, a combination of a battery pack 100 and a tool lamp 200 in an embodiment of the present application includes the battery pack 100 and the tool lamp 200. The battery pack 100 is configured to supply power to the tool lamp 200 and includes a cell for storing electric power and at least one battery pack interface 110 that can be detachably connected to the tool lamp 200, where the battery pack interface 110 is provided with a battery pack terminal electrically connected to the tool lamp 200.

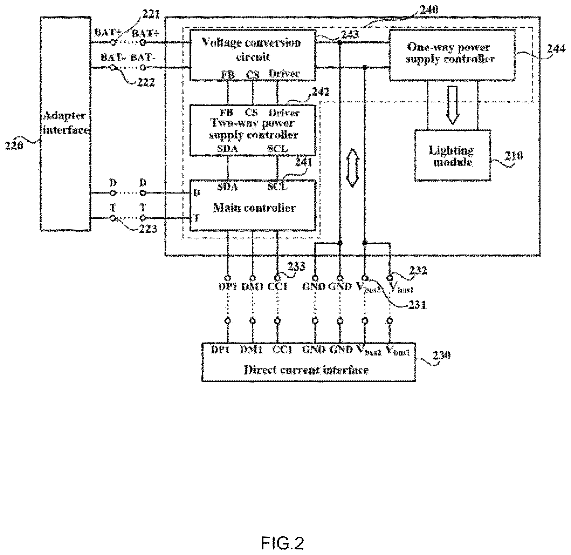

As shown in FIG. 1, the tool lamp 200 is specifically a hand-held lighting lamp. Referring to FIG. 2, the tool lamp 200 includes a lighting module 210, an adapter interface 220, a direct current interface 230, and a circuit board unit 240.

The lighting module 210 is a light-emitting diode (LED) light-emitting module. Of course, the lighting module 210 may also be configured to be other light-emitting units, as long as a lighting function is satisfied, which is not limited herein.

The adapter interface 220 is configured to be detachably connected to the battery pack interface 110 of the battery pack 100. The adapter interface 220 includes an adapter positive terminal 221, an adapter negative terminal 222, and an adapter communication terminal 223, where the adapter positive terminal 221 and the adapter negative terminal 222 are electrically connected to the battery pack terminal.

Referring to FIG. 2, the direct current interface 230 is configured to be capable of being selectively connected to an external power consumption device or an external power supply device. In the case where the direct current interface 230 is in a charge state, electric power from the external power supply device is received; and in the case where the direct current interface 230 is in a discharge state, electric power of the battery pack 100 is supplied to the external power consumption device.

The direct current interface 230 includes a detection terminal 233 and an electric power terminal, where the detection terminal 233 detects a state signal of the direct current interface 230, and the electric power terminal is configured to output or input electric power.

The electric power terminal of the direct current interface 230 includes at least two power positive terminals. Two power positive terminals are a first electric power terminal 231 and a second electric power terminal 232, respectively, such as Vbus1 and Vbus2. The first electric power terminal 231 and the second electric power terminal 232 can be connected to a positive terminal of the external power consumption device or a positive terminal of the external power supply device and are configured to input or output electric power.

The output or input power of the direct current interface is P, where P ≤ 100 W; or 100 W ≤ P ≤ 200 W; or 200 W ≤ P ≤ 500 W.

The output or input voltage of the direct current interface is U, where U ≤ 20 V; or 20 V ≤ U ≤ 60 V; 60 V ≤ U ≤ 100V.

The direct current interface 230 further includes the detection terminal 233 such as CC1. The detection terminal 233 is configured to detect the state signal of the direct current interface 230, where the direct current interface 230 has the charge state, the discharge state, and an empty state.

Specifically, in the case where the direct current interface 230 is connected to the external power supply device, the detection terminal 233 detects a high level, the external power supply device is equivalent to a pull-up resistor, it is determined that the direct current interface 230 is a power supply side, the battery pack 100 is equivalent to a pull-down resistor and determined as a power receiving side, and the detection terminal 233 determines that the direct current interface 230 is in the charge state and sends a charge control signal to the circuit board unit 240 so that the external power supply device charges the battery pack 100.

In the case where the direct current interface 230 is connected to the external power consumption device, the detection terminal 233 detects a low level, the external power consumption device is equivalent to a pull-down resistor, it is determined that the direct current interface 230 is a power receiving side, the battery pack 100 is equivalent to a pull-up resistor and determined as a power supply side, and the detection terminal 233 determines that the direct current interface 230 is in the discharge state and sends a discharge control signal to the circuit board unit 240 so that the battery pack 100 is discharged to supply power to the external power consumption device.

The circuit board unit 240 is connected in series between the adapter interface 220 and the direct current interface 230; the circuit board unit 240 includes a two-way control module and a one-way control module. The circuit board unit 240 may be one circuit board or may be integrated by multiple circuit boards, which is not limited herein.

The two-way control module is connected in series between the direct current interface 230 and the adapter interface 220, where the two-way control module is configured to adjust electric power of the external power supply device according to a control signal of the direct current interface 230 to form an electric power input adapted to the battery pack 100 so that the external power supply device charges the battery pack 100; or the two-way control module is configured to match a discharge voltage of the battery pack 100 with a power supply voltage required by the external power consumption device according to the control signal of the direct current interface 230 so that the external power consumption device is powered.

As a specific embodiment, the two-way control module includes a main controller 241, a two-way power supply controller 242, and a voltage conversion circuit 243 that are disposed on the circuit board unit 240.

In the case where the direct current interface 230 is connected to the external power supply device, the detection terminal 233 detects a charge signal and determines that the direct current interface 230 is in the charge state, and the detection terminal 233 sends the charge control signal to the main controller 241; the main controller 241 outputs a control signal to the two-way power supply controller 242 according to the charge control signal; the two-way power supply controller 242 receives the control signal from the main controller 241 and outputs a power supply control signal to the voltage conversion circuit 243 to control a current direction of the voltage conversion circuit 243 and control the voltage conversion circuit 243 to adjust the electric power of the external power supply device to form the electric power input adapted to the battery pack 100 so that the external power supply device supplies power to the battery pack 100.

The main controller 241 can also receive related communication signals from the communication terminal 223 of the battery pack 100 to send power supply information adapted to the battery pack 100 to the main controller 241, such as voltage and current information. The main controller 241 sends the control signal to the two-way power supply controller 242 according to the power supply information, and finally, the two-way power supply controller 242 outputs the power supply control signal to the voltage conversion circuit 243 to adjust electric power input by the external power supply device to the battery pack 100.

In the case where the direct current interface 230 is connected to the external power consumption device, the detection terminal 233 detects a direction signal and determines that the direct current interface 230 is in the discharge state, and the detection terminal 233 sends the discharge control signal to the main controller 241; the main controller 241 outputs a control signal to the two-way power supply controller 242 according to the discharge control signal; the two-way power supply controller 242 receives the control signal from the main controller 241 and outputs a power supply control signal to the voltage conversion circuit 243 to control a current direction of the voltage conversion circuit 243, and the voltage conversion circuit 243 matches the discharge voltage of the battery pack 100 with the power supply voltage required by the external power consumption device so that the external power consumption device is powered.

In this manner, an external power supply device of a smartphone or a laptop available on site may be used to supply power to the battery pack 100 through the direct current interface, and the battery pack 100 may also output the electric power stored in the cell to supply power to an external power consumption device such as the smartphone or the laptop. It is to be understood that the power supply includes a case where electric power is directly supplied to the external power consumption device for its use and a case where the external power consumption device is charged.

The tool lamp in the present application is provided with the direct current interface, the two-way control module, and the one-way control module, which expands the use of the tool lamp and is convenient for a user to use. It is to be understood that since a design circuit architecture of the two-way power supply controller is adopted in the tool lamp, the charge and discharge control can be achieved through the same controller, which reduces the introduction of other operational amplifier circuits and simplifies the circuit structure.

The one-way control module is connected in series between the direct current interface 230 and the lighting module 210 and connected in series between the adapter interface 220 and the lighting module 210, where the one-way control module is configured to convert the electric power of the external power supply device or the electric power of the battery pack 100 into an electric power input adapted to the lighting module 210.

The one-way control module includes a one-way power supply controller 244 disposed on the circuit board unit 240 and connected in series between the direct current interface 230 and the lighting module 210. In the case where the direct current interface 230 is connected to the external power supply device, the one-way power supply controller 244 receives and adjusts the electric power from the external power supply device to form the electric power input adapted to the lighting module 210 so that the external power supply device supplies power to the lighting tool 210.

The one-way power supply controller 244 is also connected in series between the voltage conversion circuit 243 and the lighting module 210. In the case where the adapter interface 220 is connected to the battery pack 100, the one-way power supply controller 244 receives and adjusts the electric power of the battery pack 100 to form the electric power input adapted to the lighting module 210 so that the battery pack 100 supplies power to the lighting tool 210.

It is to be understood that the tool lamp may be connected to the external power supply device or the external power consumption device through an adapter, and the adapter can make the tool lamp output electric power and can also supply electric power to charge the tool lamp and/or the battery pack. As shown in FIG. 1, the adapter may include a power plug and an output interface; of course, the adapter may also include an input interface and an output interface that are configured to be connected to the tool lamp and the external power supply device or the external power consumption device, respectively.

An operation process of the tool lamp in the present application is described below.
A: the case where the direct current interface 230 is connected to the external power supply device.

If the battery pack 100 is not connected to the adapter interface 220, the external power supply device supplies power to the lighting module 210 through the one-way control module, and the lighting module 210 can perform lighting. In this case, the adapter interface 220 is not powered on.

If the battery pack 100 is connected to the adapter interface 220, the main controller 241 receives a signal from the adapter communication terminal 223 of the battery pack 100, the external power supply device supplies power to the lighting module 210 through the one-way control module, and the external power supply device charges the battery pack 100 through the two-way control module. For a process of charging the battery pack 100 by the external power supply device, reference may be made to the preceding related description, which is not repeated herein.

B: the case where the direct current interface is connected to the external power consumption device.

In this case, the battery pack 100 is connected to the adapter interface 220, and the battery pack 100 supplies power to the external power consumption device through the two-way control module; when there is a requirement for lighting, the battery pack 100 can also supply power to the lighting module 210 through the one-way control module, and the lighting module 210 can perform lighting.

C: the case where no device is connected to the direct current interface.

In this case, the battery pack 100 supplies power to the lighting module 210. In the case where the battery pack 100 is connected to the adapter interface 220, the lighting module 210 can perform lighting.

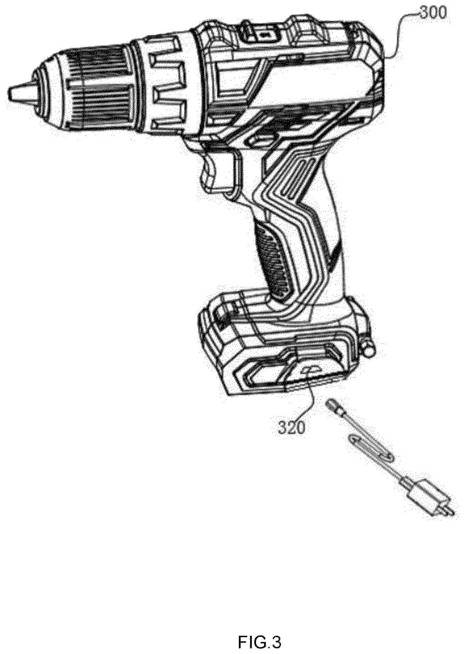

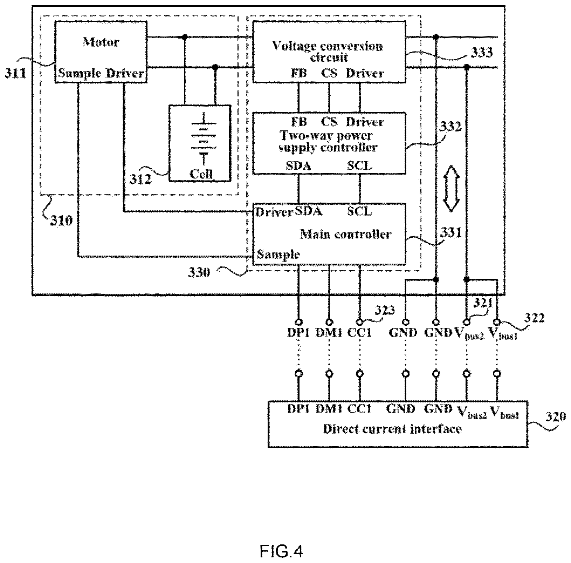

As shown in FIG. 3, a power tool 300 in another embodiment of the present application is provided. Referring to FIG. 4, the power tool 300 includes a power module, an output unit (not shown in the figure), a cell 312, a direct current interface 320, and a two-way control module 340.

As shown in FIG. 3, the powre tool 300 is a hand-held power tool such as an electric drill, a screwdriver, a nail gun, a wrench, and an angle grinder. Although this embodiment relates to a hand-held power tool, it is to be understood that the present application is not limited to the disclosed embodiment and can be applied to other types of power tools, including but not limited to garden power tools such as a vehicle-type lawn mower and a hair dryer.

Referring to FIG. 4, the power module includes a motor 311 and the cell 312. The motor 311 may be powered by the cell 312 or an external power supply device. The motor 311 is configured to drive the output unit to output power to an outside. For example, in the case where the power tool is the screwdriver, an output mechanism is an output shaft driven by the motor.

The cell 312 is configured to store power and can be repeatedly charged and discharged; the cell 312 may be a lithium-ion battery or a graphene battery.

The direct current interface 320 is configured to be capable of being selectively connected to an external power consumption device or an external power supply device. In the case where the direct current interface 320 is in a charge state, electric power from the external power supply device is received; and in the case where the direct current interface 320 is in a discharge state, electric power of the cell 312 is supplied to the external power consumption device.

Referring to FIG. 4, the direct current interface 320 includes a detection terminal 323 and an electric power terminal, where the electric power terminal is configured to output or input electric power. The electric power terminal of the direct current interface 320 includes at least two power positive terminals. Two power positive terminals are a first electric power terminal 321 and a second electric power terminal 322, respectively, such as Vbus1 and Vbus2. The first electric power terminal 321 and the second electric power terminal 322 can be connected to a positive terminal of the external power consumption device or a positive terminal of the external power supply device and are configured to input or output electric power.

The output or input power of the direct current interface is P, where P ≤ 100 W; or 100 W ≤ P ≤ 200 W; or 200 W ≤ P ≤ 500 W.

The output or input voltage of the direct current interface is U, where U ≤ 20 V; or 20 V ≤ U ≤ 60 V; 60 V ≤ U ≤ 100V.

The direct current interface 320 further includes the detection terminal 323 such as CC1; the detection terminal 323 detects a state signal of the direct current interface 320. The detection terminal 323 is configured to detect the state signal of the direct current interface 320, where the direct current interface 320 has the charge state, the discharge state, and an empty state.

Specifically, in the case where the direct current interface 320 is connected to the external power supply device, the detection terminal 323 detects a high level, the external power supply device is equivalent to a pull-up resistor, it is determined that the direct current interface 320 is a power supply side, the cell 312 is equivalent to a pull-down resistor and determined as a power receiving side, and the detection terminal 323 determines that the direct current interface 320 is in the charge state and sends a charge control signal to the two-way control module 330 so that the external power supply device charges the cell 312.

In the case where the direct current interface 320 is connected to the external power consumption device, the detection terminal 323 detects a low level, the external power consumption device is equivalent to a pull-down resistor, it is determined that the direct current interface 320 is a power receiving side, the cell 312 is equivalent to a pull-up resistor and determined as a power supply side, and the detection terminal 323 determines that the direct current interface 320 is in the discharge state and sends a discharge control signal to the two-way control module 330 so that the cell 312 is discharged to supply power to the external power consumption device.

The two-way control module 330 is connected in series between the power module 310 and the direct current interface 320, where the two-way control module is configured to adjust electric power of the external power supply device according to a control signal of the direct current interface 320 to form an electric power input adapted to the cell 312 so that the external power supply device charges the cell 312; or the two-way control module is configured to adjust the electric power of the external power supply device according to a signal of the motor 311 to form an electric power input adapted to the motor 311 so that the external power supply device supplies power to the motor 311; the two-way control module 330 may also be configured to match a discharge voltage of the cell 312 with a power supply voltage required by the external power consumption device according to the control signal of the direct current interface 320 so that the external power consumption device is powered.

As a specific embodiment, the two-way control module may be one circuit board or may be integrated by multiple circuit boards, which is not limited herein. The two-way control module in the present application includes a main controller 331, a two-way power supply controller 332, and a voltage conversion circuit 333 that are disposed on a circuit board.

Specifically, in the case where the direct current interface 320 is connected to the external power supply device, the detection terminal 323 detects a charge signal and determines that the direct current interface 320 is in the charge state, and the detection terminal 232 sends the charge control signal to the main controller 331. The main controller 331 outputs a control signal to the two-way power supply controller 332 according to the charge control signal; the two-way power supply controller 332 receives the control signal from the main controller 331 and outputs a power supply control signal to the voltage conversion circuit 333 to control a current direction of the voltage conversion circuit 333 and control the voltage conversion circuit 333 to adjust the electric power of the external power supply device to form an electric power output adapted to the cell 312 or the motor 311 so that the external power supply device supplies power to the cell 312 or the motor 311.

It is to be understood that the main controller 331 further includes a communication terminal communicatively connected to the motor, and the main controller 331 can receive a communication signal from the motor 311 to send power supply information adapted to the motor 311 to the main controller 331, such as voltage and current information; the main controller 331 sends the control signal to the two-way power supply controller 332 according to the power supply information, and finally, the two-way power supply controller 332 outputs the power supply control signal to the voltage conversion circuit 333 to adjust electric power input by the external power supply device to the motor 311.

In the case where the direct current interface 320 is connected to the external power consumption device, the detection terminal 323 detects a discharge signal and determines that the direct current interface 320 is in the discharge state, the detection terminal 323 sends the discharge control signal to the main controller 331, and the main controller 331 outputs the control signal to the two-way power supply controller 332 according to the discharge control signal. The two-way power supply controller 332 receives the control signal and controls the current direction of the voltage conversion circuit 333, and the voltage conversion circuit 333 matches the discharge voltage of the cell 312 with the power supply voltage required by the external power consumption device so that the external power consumption device is powered.

In this manner, an external power supply device of a smartphone or a laptop available on site may be used to charge the battery pack 100 through the direct current interface, and the battery pack 100 may also output the electric power stored in the cell to supply power to an external power consumption device such as the smartphone or the laptop. It is to be understood that the power supply includes a case where electric power is directly supplied to the external power consumption device for its use and a case where the external power consumption device is charged.

It is to be understood that the power tool may be connected to the external power supply device or the external power consumption device through an adapter, and the adapter can make the battery pack output electric power and can also supply electric power to charge the power tool and/or the cell. As shown in FIG. 3, the adapter may include a power plug and an output interface; of course, the adapter may also include an input interface and an output interface that are configured to be connected to the power tool and the external power supply device or the external power consumption device, respectively.

An operation process of the power tool in the present application is described below.
A: the case where the direct current interface 320 is connected to the external power supply device.

The main controller 331 receives a signal from the communication terminal of the motor 311, the external power supply device supplies power to the motor 311 through the two-way control module, and the external power supply module may also charge the cell 312 through the two-way control module 330. For a process of supplying power to the cell or the motor by the external power supply device, reference may be made to the preceding related description, which is not repeated herein.

Of course, in the case where the direct current interface 320 is connected to the external power supply device, the external power supply device may be configured to only supply power to the motor or only charge the cell. The preceding configuration may be implemented by a predetermined program set on the main controller 331.

B: the case where the direct current interface is connected to the external power consumption device.

In this case, the cell 312 supplies power to the external power consumption device through the two-way control module 330; and the cell 312 may also supply power to the motor, and the power tool 300 can operate normally.

C: the case where no device is connected to the direct current interface.

In this case, the cell 312 supplies power to the motor 311, and the power tool can operate normally.

The power tool in the present application is provided with the direct current interface and the two-way control module, which expands the use of the power tool and is convenient for a user to use. It is to be understood that since a design circuit architecture of the two-way power supply controller is adopted in the power tool, the charge and discharge control can be achieved through the same controller, which reduces the introduction of other operational amplifier circuits and simplifies the circuit structure.

## Claims

1. A power tool (300), comprising:
a power module (310) comprising a motor (311), wherein the motor (311) is configured to drive an output unit to output power to an outside;
a direct current interface (320) configured to be capable of being connected to an external power supply device; and
a two-way control module (330) connected in series between the direct current interface (320) and the power module (310), wherein the two-way control module (330) is configured to adjust electric power of the external power supply device according to a control signal (323) of the direct current interface (320) to form an electric power input adapted to a cell (312) and/or the motor (311) when said direct current interface (320) is connected to said external power supply device, so that the external power supply device supplies power to the cell (312) and/or the motor (311), wherein said cell (312) supplies electric power to said motor (311);
**characterized in that**
said power module (310) comprises said cell (312);
said direct current interface (320) is configured to be selectively connectable to said external power supply device or an external power consumption device;
wherein the two-way control module (330) is configured to match a discharge voltage of the cell (312) with a power supply voltage required by the external power consumption device according to the control signal (323) of the direct current interface (320) when said direct current interface (320) is connected to said external power consumption device, so that the external power consumption device is powered.

2. The power tool (300) of claim 1, wherein
the two-way control module (330) comprises:
a voltage conversion circuit (333) connected to the direct current interface (320),
wherein the voltage conversion circuit (333) is configured to convert the electric power of the external power supply device into the electric power input adapted to the cell (312) and/or the motor (311); or the voltage conversion circuit (333) is configured to convert an electric power of the cell (312) into an electric power output adapted to the external power consumption device;
a main controller (331) connected to the direct current interface (320), wherein the main controller (331) is configured to output a control signal (323) to a two-way power supply controller (332) according to a state signal of the direct current interface (320); and
the two-way power supply controller (332) connected to the voltage conversion circuit (333) and the main controller (331), respectively, wherein the two-way power supply controller (332) is configured to control a current direction and an output voltage of the voltage conversion circuit (333) according to the control signal (323) of the main controller (331) so that the external power supply device supplies power to the cell (312) and/or the motor (311) or the cell (312) is discharged to supply power to the external power consumption device.

3. The power tool (300) of claim 2, wherein the main controller (331) further comprises a communication terminal communicatively connected to the motor (311), and the main controller (331) controls the current direction of the voltage conversion circuit (333) according to communication information of the motor (311) so that the external power supply device supplies power to the motor (311).

4. The power tool (300) of claim 2, wherein the direct current interface (320) comprises a detection terminal (323) and an electric power terminal (321, 322), wherein the detection terminal detects the state signal of the direct current interface (320), and the electric power terminal is configured to output or input electric power.

5. The power tool (300) of claim 4, wherein the electric power terminal comprises at least two power positive terminals (321, 322), wherein the at least two power positive terminals are connected to a positive electrode of the external power consumption device or a positive electrode of the external power supply device.

6. The power tool (300) of claim 4, wherein the state signal comprises at least a charge signal and a discharge signal.

7. The power tool (300) of claim 6, wherein in a case where the direct current interface (320) is connected to the external power supply device, the detection terminal detects the charge signal of the direct current interface (320) and sends a charge control signal (323) to the main controller (331) so that the main controller (331) controls the current direction of the voltage conversion circuit (333) and thus the external power supply device charges the cell (312).

8. The power tool (300) of claim 7, wherein in a case where the detection terminal detects a high level, it is determined that the direct current interface (320) receives the charge signal.

9. The power tool (300) of claim 6, wherein in a case where the direct current interface (320) is connected to the external power consumption device, the detection terminal detects the discharge signal of the direct current interface (320) and sends a discharge control signal (323) to the main controller (331) so that the main controller (331) controls the current direction of the voltage conversion circuit (333) and thus the cell (312) is discharged to supply power to the external power consumption device.

10. The power tool (300) of claim 9, wherein in a case where the detection terminal detects a low level, it is determined that the direct current interface (320) receives the discharge signal.

## Patentansprüche

1. Elektrowerkzeug (300), umfassend:
ein Leistungsmodul (310), das einen Motor (311) umfasst, wobei der Motor (311) so konfiguriert ist, dass er eine Ausgabeeinheit antreibt, um Leistung nach außen abzugeben;
eine Gleichstromschnittstelle (320), die so ausgelegt ist, dass sie mit einer externen Stromversorgungsvorrichtung verbunden werden kann; und
ein Zweiwege-Steuermodul (330), das in Reihe zwischen der Gleichstromschnittstelle (320) und dem Leistungsmodul (310) geschaltet ist, wobei das Zwei-Wege-Steuermodul (330) so eingerichtet ist, dass es die elektrische Leistung der externen Stromversorgungseinrichtung entsprechend einem Steuersignal (323) der Gleichstromschnittstelle (320) einstellt, um eine an eine Zelle (312) und/oder den Motor (311) angepasste elektrische Leistungsaufnahme zu bilden, wenn die Gleichstromschnittstelle (320) mit der externen Stromversorgungseinrichtung verbunden ist, sodass die externe Stromversorgungseinrichtung die Zelle (312) und/oder den Motor (311) mit Strom versorgt, wobei die Zelle (312) elektrischen Strom an den Motor (311) liefert;
**dadurch gekennzeichnet, dass**
das genannte Leistungsmodul (310) die genannte Zelle (312) umfasst;
die Gleichstromschnittstelle (320) ist so konfiguriert, dass sie selektiv mit der externen Stromversorgungseinrichtung oder einer externen Stromverbrauchseinrichtung verbunden werden kann;
wobei das Zwei-Wege-Steuermodul (330) so ausgelegt ist, dass es eine Entladespannung der Zelle (312) an eine von der externen Stromverbrauchsvorrichtung benötigte Stromversorgungsspannung gemäß dem Steuersignal (323) der Gleichstromschnittstelle (320) anpasst, wenn die Gleichstromschnittstelle (320) mit der externen Stromverbrauchsvorrichtung verbunden ist, sodass die externe Stromverbrauchseinrichtung mit Strom versorgt wird.

2. Elektrowerkzeug (300) nach Anspruch 1, wobei
das Zwei-Wege-Steuermodul (330) Folgendes umfasst:
eine Spannungswandlerschaltung (333), die mit der Gleichstromschnittstelle (320) verbunden ist,
wobei die Spannungswandlerschaltung (333) so ausgelegt ist, dass sie die elektrische Leistung der externen Stromversorgungseinrichtung in die an die Zelle (312) und/oder den Motor (311) angepasste elektrische Leistungsaufnahme umwandelt; oder die Spannungswandlerschaltung (333) ist so ausgelegt, dass sie eine elektrische Leistung der Zelle (312) in eine elektrische Leistung umwandelt, die an die externe Stromverbrauchseinrichtung angepasst ist;
einen Hauptcontroller (331), der mit der Gleichstromschnittstelle (320) verbunden ist, wobei der Hauptcontroller (331) so konfiguriert ist, dass er ein Steuersignal (323) an einen Zweiwege-Stromversorgungscontroller (332) entsprechend einem Zustandssignal der Gleichstromschnittstelle (320) ausgibt; und
der Zweiwege-Stromversorgungsregler (332), der mit der Spannungswandlerschaltung (333) bzw. dem Hauptcontroller (331) verbunden ist, wobei der Zweiwege-Stromversorgungsregler (332) so konfiguriert ist, dass er eine Stromrichtung und eine Ausgangsspannung der Spannungswandlerschaltung (333) entsprechend dem Steuersignal (323) des Hauptcontrollers (331) steuert, sodass die externe Stromversorgungseinrichtung die Zelle (312) und/oder den Motor (311) mit Strom versorgt oder die Zelle (312) entladen wird, um die externe Stromverbrauchseinrichtung mit Strom zu versorgen.

3. Elektrowerkzeug (300) nach Anspruch 2, wobei der Hauptcontroller (331) ferner einen Kommunikationsanschluss umfasst, der mit dem Motor (311) kommunikativ verbunden ist, und der Hauptcontroller (331) steuert die Stromrichtung der Spannungswandlerschaltung (333) entsprechend der Kommunikationsinformationen des Motors (311), sodass die externe Stromversorgungseinrichtung den Motor (311) mit Strom versorgt.

4. Elektrowerkzeug (300) nach Anspruch 2, wobei die Gleichstromschnittstelle (320) einen Erfassungsanschluss (323) und einen elektrischen Leistungsanschluss (321, 322) umfasst, wobei der Erfassungsanschluss das Zustandssignal der Gleichstromschnittstelle (320) erfasst, und der Stromanschluss ist so konfiguriert, dass er elektrischen Strom abgibt oder einspeist.

5. Elektrowerkzeug (300) nach Anspruch 4, wobei der elektrische Leistungsanschluss mindestens zwei positive Leistungsanschlüsse (321, 322) umfasst, wobei die mindestens zwei positiven Stromanschlüsse mit einer positiven Elektrode der externen Stromverbrauchseinrichtung oder einer positiven Elektrode der externen Stromversorgungseinrichtung verbunden sind.

6. Elektrowerkzeug (300) nach Anspruch 4, wobei das Zustandssignal mindestens ein Ladesignal und ein Entladesignal umfasst.

7. Elektrowerkzeug (300) nach Anspruch 6, wobei in einem Fall, in dem die Gleichstromschnittstelle (320) mit der externen Stromversorgungseinrichtung verbunden ist, der Erfassungsanschluss das Ladesignal der Gleichstromschnittstelle (320) erfasst und ein Ladesteuersignal (323) an den Hauptcontroller (331) sendet, sodass der Hauptcontroller (331) die Stromrichtung der Spannungswandlerschaltung (333) steuert und so das externe Stromversorgungsgerät die Zelle (312) auflädt.

8. Elektrowerkzeug (300) nach Anspruch 7, wobei in einem Fall, in dem die Erfassungsklemme einen hohen Pegel erfasst, festgelegt wird, dass die Gleichstromschnittstelle (320) das Ladesignal empfängt.

9. Elektrowerkzeug (300) nach Anspruch 6, wobei in einem Fall, in dem die Gleichstromschnittstelle (320) mit der externen Stromverbrauchseinrichtung verbunden ist, die Erfassungsklemme das Entladesignal der Gleichstromschnittstelle (320) erfasst und ein Entladesteuersignal (323) an den Hauptcontroller (331) sendet, sodass der Hauptcontroller (331) die Stromrichtung der Spannungswandlerschaltung (333) steuert, und so wird die Zelle (312) entladen, um das externe Stromverbrauchsgerät mit Strom zu versorgen.

10. Elektrowerkzeug (300) nach Anspruch 9, wobei in einem Fall, in dem die Erfassungsklemme einen niedrigen Pegel feststellt, festgelegt wird, dass die Gleichstromschnittstelle (320) das Entladesignal erhält.

## Revendications

1. Outil électrique (300), comprenant :
un module électrique (310) comprenant un moteur (311), dans lequel le moteur (311) est configuré pour entraîner une unité de sortie pour fournir de l'énergie à un extérieur ;
une interface de courant direct (320) configuré pour pouvoir être connectée à un dispositif d'alimentation électrique externe ; et
un module de commande bidirectionnel (330) connecté en série entre l'interface de courant direct (320) et le module électrique (310), dans lequel le module de commande bidirectionnel (330) est configuré pour régler l'énergie électrique du dispositif d'alimentation électrique externe en fonction d'un signal de commande (323) de l'interface de courant direct (320) pour former une entrée d'énergie électrique adaptée à une cellule (312) et/ou à un moteur (311) lorsque ladite interface de courant direct (320) est connectée audit dispositif d'alimentation électrique externe, de sorte que le dispositif d'alimentation électrique externe fournit de l'énergie à la cellule (312) et/ou au moteur (311), dans lequel ladite cellule (312) fournit de l'énergie électrique audit moteur (311) ;
**caractérisé en ce que**
ledit module électrique (310) comprend ladite cellule (312) ;
ladite interface de courant direct (320) est configurée pour pouvoir être connectée sélectivement audit dispositif d'alimentation électrique externe ou à un dispositif de consommation électrique externe ;
dans lequel le module de commande bidirectionnel (330) est configuré pour correspondre à une tension de décharge de la cellule (312) avec une tension d'alimentation électrique requise par le dispositif de consommation électrique externe en fonction du signal de commande (323) de l'interface de courant direct (320) lorsque ladite interface de courant direct (320) est connectée audit dispositif de consommation électrique externe, de sorte que le dispositif de consommation électrique externe est alimenté.

2. Outil électrique (300) selon la revendication 1, dans lequel le module de commande bidirectionnel (330) comprend :
un circuit de conversion de tension (333) connecté à l'interface de courant direct (320),
dans lequel le circuit de conversion de tension (333) est configuré pour convertir l'énergie électrique du dispositif d'alimentation électrique externe en l'entrée d'énergie électrique adaptée à la cellule (312) et/ou au moteur (311) ; ou le circuit de conversion de tension (333) est configuré pour convertir une énergie électrique de la cellule (312) en une sortie d'énergie électrique adaptée au dispositif de consommation électrique externe ;
un contrôleur principal (331) connecté à l'interface de courant direct (320), dans lequel le contrôleur principal (331) est configuré pour envoyer un signal de commande (323) à un contrôleur d'alimentation électrique bidirectionnel (332) en fonction d'un signal d'état de l'interface de courant direct (320) ; et
le contrôleur d'alimentation électrique bidirectionnel (332) connecté au circuit de conversion de tension (333) et au contrôleur principal (331), respectivement, dans lequel le contrôleur d'alimentation électrique bidirectionnel (332) est configuré pour commander une direction de courant et une tension de sortie du circuit de conversion de tension (333) en fonction du signal de commande (323) du contrôleur principal (331), de sorte que le dispositif d'alimentation électrique externe fournit de l'énergie à la cellule (312) et/ou au moteur (311) ou que la cellule (312) est déchargée pour fournir de l'énergie au dispositif d'alimentation électrique externe.

3. Outil électrique (300) selon la revendication 2, dans lequel le contrôleur principal (331) comprend en outre un terminal de communication connecté en communication au moteur (311), et le contrôleur principal (331) commande la direction de courant du circuit de conversion de tension (333) en fonction d'informations de communication du moteur (311), de sorte que le dispositif d'alimentation électrique externe fournit de l'énergie au moteur (311).

4. Outil électrique (300) selon la revendication 2, dans lequel l'interface de courant direct (320) comprend une borne de détection (323) et une borne d'énergie électrique (321, 322), dans lequel la borne de détection détecte le signal d'état de l'interface de courant direct (320), et la borne d'énergie électrique est configurée pour sortir ou entrer de l'énergie électrique.

5. Outil électrique (300) selon la revendication 4, dans lequel la borne d'énergie électrique comprend au moins deux bornes positives d'alimentation (321, 322), dans lequel les au moins deux bornes positives d'alimentation sont connectées à une électrode positive du dispositif de consommation électrique externe ou à une électrode positive du dispositif d'alimentation électrique externe.

6. Outil électrique (300) selon la revendication 4, dans lequel le signal d'état comprend au moins un signal de charge et un signal de décharge.

7. Outil électrique (300) selon la revendication 6, dans lequel, dans un cas où l'interface de courant direct (320) est connectée au dispositif d'alimentation électrique externe, la borne de détection détecte le signal de charge de l'interface de courant direct (320) et envoie un signal de commande de charge (323) au contrôleur principal (331), de sorte que le contrôleur principal (331) commande la direction de courant du circuit de conversion de tension (333) et par conséquent le dispositif d'alimentation électrique externe charge la cellule (312).

8. Outil électrique (300) selon la revendication 7, dans lequel, dans un cas où la borne de détection détecte un niveau élevé, il est déterminé que l'interface de courant direct (320) reçoit le signal de charge.

9. Outil électrique (300) selon la revendication 6, dans lequel, dans un cas où l'interface de courant direct (320) est connectée au dispositif de consommation électrique externe, la borne de détection détecte le signal de décharge de l'interface de courant direct (320) et envoie un signal de commande de décharge (323) au contrôleur principal (331), de sorte que le contrôleur principal (331) commande la direction de courant du circuit de conversion de tension (333) et par conséquent la cellule (312) est déchargée pour fournir de l'énergie au dispositif de consommation électrique externe.

10. Outil électrique (300) selon la revendication 9, dans lequel, dans un cas où la borne de détection détecter un niveau bas, il est déterminé que l'interface de courant direct (320) reçoit le signal de décharge.
